Europäisches Patentamt

European Patent Office

Office européen des brevets

(19)

(11) Publication number: **0 094 670**
**B1**

(12) **EUROPEAN PATENT SPECIFICATION**

(45) Date of publication of patent specification: **26.03.86**

(51) Int. Cl.⁴: **H 04 N 9/12, H 04 N 3/10**

(21) Application number: **83104819.4**

(22) Date of filing: **16.05.83**

(54) Color image display apparatus.

(30) Priority: **19.05.82 JP 85136/82**
**30.04.83 JP 77028/83**

(43) Date of publication of application:
**23.11.83 Bulletin 83/47**

(45) Publication of the grant of the patent:
**26.03.86 Bulletin 86/13**

(84) Designated Contracting States:
**DE FR GB**

(56) References cited:
**EP-A-0 025 999**
**EP-A-0 057 836**
**FR-A-2 382 065**
**US-A-4 020 280**
**US-A-4 158 210**

**NHK TECHNICAL MONOGRAPH, no. 28, March
1979, pages 3-47, Tokyo, JP, "Gas-discharge
panels for color TV display"**

(73) Proprietor: **Matsushita Electric Industrial Co.,
Ltd.**
**1006, Oaza Kadoma**
**Kadoma-shi Osaka-fu, 571 (JP)**

(72) Inventor: **Iyehara, Sadahiro**
**C26-213, 1-1, Takemidai**
**Suita City, 565 (JP)**
Inventor: **Inohara, Shizuo**
**A2-413, 3-6, Shinsenri-minamimachi**
**Toyonaka City, 565 (JP)**
Inventor: **Masuda, Mitsuya**
**90-22, Tsunoe-cho 1-chome**
**Takatsuki City, 569 (JP)**
Inventor: **Ueda, Minoru**
**11-10, Tsunoe-cho 3-chome**
**Takatsuki City, 569 (JP)**
Inventor: **Yamamoto, Keisuke**
**2-12, Yamatedai 3-chome**
**Ibaraki City, 567 (JP)**

(74) Representative: **Patentanwälte Kirschner &
Grosse**
**Herzog-Wilhelm-Strasse 17**
**D-8000 München 2 (DE)**

## Description

The present invention relates to an image display apparatus according to the first portion of claim 1.

Hitherto, for an image display apparatus for a televison set, a cathode-ray tube having a single electron gun or, three electron guns set in a neck part of a bulky cone shaped vacuum enclosure has been used for long time. The shortcoming of the conventional cathode ray tube is a large depth in comparison with the size of the screen face, disabling to provide a flat and compact television set. Though EL display apparatus, plasma display apparatus or liquid crystal display apparatus has been developed, these are not sufficiently usable for practical use because they have problems in brightness, contrast or color displaying.

A flat-type image display apparatus is known from EP—A—0025999. This known image display apparatus comprises AID conversion means for converting a television signal into digital signals, memory means for storing said digital signals until the next end of the horizontal scanning period and PWM means for converting said digital signals read out from said memory means into pulse-width modulated signals and image display means for displaying an image by utilizing said pulse-width modulated signals. Further, this known apparatus comprises clock signal generator means for generating a clock signal being synchronized to the television signal and having a frequency of an integer-times-multiplication of the television signal.

This known image display apparatus is a plasma display apparatus and is provided for displaying black and white images. Further, in this apparatus the pulse-width modulation signals are fed to column electrodes of a system for controlling the image display, which comprises row-electrodes and column-electrodes.

US—A—158 210 discloses a flat-type color image display apparatus using electron beams, the intensity of which is controlled by electrode plates. This known image display apparatus comprises analog memories which store the video signal for one horizontal scanning line. Each horizontal scanning line is broken down into a series of signals and these signals are stored in the analog memories. In this way, the video signal is converted into parallel signals, which control the electrode plates.

As a further flat type image display apparatus using electron beams, the applicant has proposed an invention in a senier European Patent Application 0057836 (which was published only after the priority data of the present case). The art of the senior application is a color display apparatus comprising:

a color phosphor screen comprising a first predetermined number of horizontally divided sections each comprising a set of regions of primary color phosphors disposed in horizontal direction,

electron beam source means for in-turn emitting a second predetermined number of horizontal rows of electron beams, each row having the first predetermined number of electron beams, producing one horizontal line on the color screen,

horizontal deflection means for selective impingements of the electron beams on the regions in turn selected corresponding kinds of primary color phosphors at one time, in turn changing colors of the horizontally divided sections,

vertical deflection means for vertically deflecting the electron beams in such a manner that electron beams of a horizontal row impinges the phosphor screen in one vertically divided segment which is corresponding to the one horizontal row, thereby vertically moving the one horizontal line in the vertically divided segment,

electron beam control means for simultaneous controlling of intensities of respective electron beams responding to color video signal for the selected kind of primary color to produce a line-at-a-time displaying of color video picture, and

a flat shaped vacuum enclosure containing the above-mentioned components therein, one end face thereof forming a screen face in which the color phosphor screen is provided.

The line-at-a-time type displaying is suitable for display apparatus of the flat type CRT, liquid crystal panel, EL panel, LED panel, plasma panel or the like flat type display apparatus. Such line-at-a-time type image display apparatus generally displays an image by storing video signal information for a period of one horizontal scanning line and reading out the stored data for that one line at a time in the immediately subsequent horizontal fly-back period.

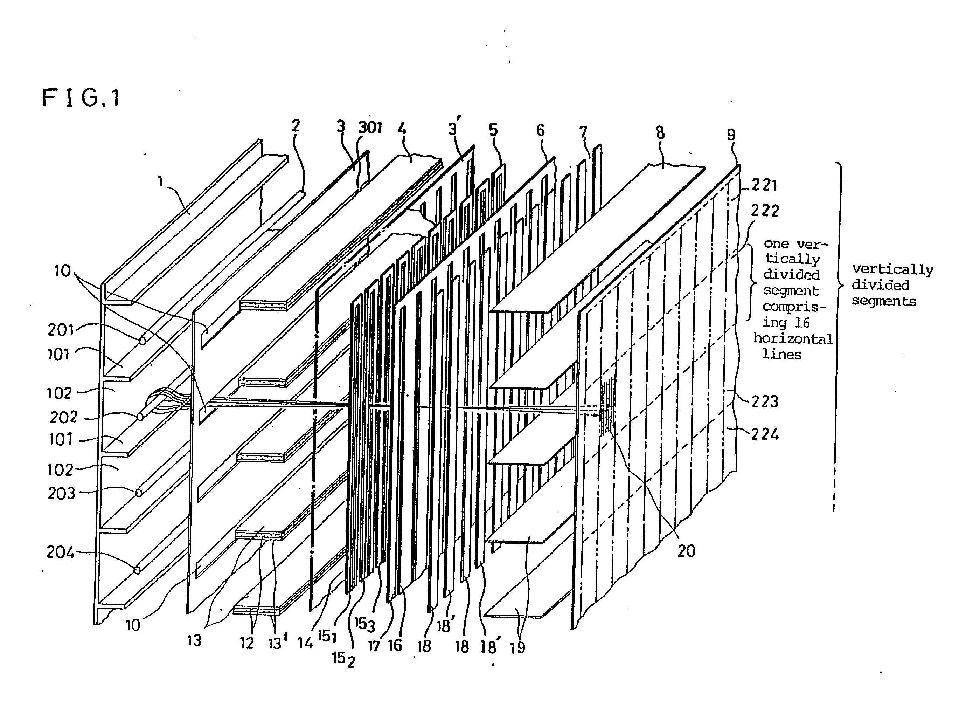

One preferred inventors' prior art apparatus is shown in Fig. 1, wherein from the back part to front part the following components are provided in a flat box-shaped enclosure,

a back electrode 1 having horizontal isolation walls 101, 101 ... projecting perpendicularly therefrom forming isolated spaces 102, 102 ... therein,

an electron beam source 2 having a row of a predetermined number (e.g. 15 in this embodiment) of horizontal line cathodes 201, 202, ... disposed substantially horizontally in the isolated spaces 102, 102 ...,

a vertical beam-focussing electrode 3 having the predetermined number (e.g. 15 in this embodiment) of horizontal slits 10,

a first vertical deflection means 4 comprising the predetermined number of pair of vertical deflection electrodes 13', 13 ..., held by insulator board 12. Each pair of vertical deflection electrodes comprises an upper electrode 13 and a lower electrode 13' both disposed substantially horizontal and defining a deflection space inbetween disposed before the corresponding horizontal slit 10,

a second vertical beam-focussing electrode 3' substantially similar to the horizontal beam-focussing electrode 6,

a predetermined large number (e.g. 320) for this embodiment) of beam control electrodes 5 consisting of vertical strip electrodes $15_1$, $15_2$ ... $15_{320}$ each having beam-passing slits 14, 14 ... disposed with uniform pitch,

a horizontal beam-focussing electrode 6 having the predetermined number (e.g. 320 for this embodiment) of vertical slits at positions in front of the slits 14, 14, ... of the beam control electrodes 5, $15_1$, $15_2$, ...,

a horizontal deflection means 7 comprising the predetermined number (e.g. 320 for this example) of vertical strip electrodes 18, 18', 18, 18' ... defining the predetermined number (e.g. 320 for this example) of vertically oblong deflection gaps inbetween,

a beam acceleration means 8 consisting of a set of horizontally disposed electrodes 19, 19 ..., and finally

a phosphor screen 9, which is ordinarily provided on the inner wall of a front face of the enclosure.

The line cathodes 201, 202 ... form electron beam source 2, wherein horizontal line cathodes are disposed forming a vertical row, with substantially uniform gaps with each other. In this example, as abovementioned 15 line cathodes 201, 202 ... 215 are provided, but only four of them are shown. The line cathodes are made by coating a tungsten wire of, for example, 10—20 µm diameter with known electron emitting cathode oxide. All the line cathodes are heated by feeding current thereto, and selective in-turn taking out of horizontal sheet shaped electron beam from selected one of the line cathode is done by changing a potential of the in-turn selected line cathode to negative with respect to the potential of the focussing electrode 3.

The back electrode 1 serves to suppress emissions of electrons from other line cathodes than the selected one and also expel the electrons from the selected cathode to its front direction. The back electrode 1 may be formed by attaching conductive substance such as conductive paint on the inner wall of the back face of the flat type vacuum enclosure. A flat plane shaped cathode may be used in place of the row the line electrode 201, 202 ....

The first vertical beam-focussing electrode 3 have the slits 10 at the position to face the line cathodes 201, 202 ... and is impressed with a DC voltage, therefore horizontal sheet shaped electron beam from a selected line cathode is formed. The sheet shaped electron beam is then divided into a large number (e.g. 320 in this example) of narrow electron beams by passing through the second vertical beam-focussing electrode 3', the control electrode 5 and horizontal focussing electrode 6. In Fig. 1, only one such narrow electron beam is shown for simplicity. Each slit 10 may have supporting ribs in midway part of the length, or further may consist of a large number (e.g. 320) of openings with very narrow rib parts 301 inbetween.

The electrodes 13, 13' of the vertical deflection means 4 are disposed at levels of substantially the centers between vertically neighboring two horizontal slits 10, 10 of the vertical focussing electrode 3, and a lower electrode 13' and an upper electrode 13 are held on both faces (upper and lower faces) of an insulation board 12. A changing voltage (a vertical deflection signal) is impressed across the pair of upper electrode and lower electrode of each pair thereby forming changing electric field for vertical deflection. In this example, as has been elucidated, by impressing the 16-step changing voltage across the pair electrodes, each electron beam is deflected in a manner to have 16 levels. And the same matter takes place in each of 15 vertically divided segments 221, 222, 223 ... 235 on the phosphor screen. Accordingly, the phosphor screen 9 has 240 horizontal lines in total (16 lines×15 segments=240 lines).

The beam control electrodes 5 comprising 320 strip electrodes $15_1$, $15_2$ ... $15_{320}$ together with the horizontal beam-focussing electrode 6 divide the horizontal sheet shaped electrode beam into 320 rod shaped electron beams, and each strip electrodes $15_1$, $15_2$ ... $15_{320}$ of the beam control electrodes 5 control intensities of the rod shaped electron beams responding to the information of the video signal. Therefore, the 320 strip electrodes control information of 320 picture elements on each horizontal line. The 320 beam control electrodes receive 320 control signals respectively and controls the 320 rod beams in such a manner as at one time for red color irradation, at one time for green color irradiation and at one time for blue color irradiation, in turn. In order to display color picture on the color phosphor screen with the control signals applied to the beam control electrodes, each picture element comprises three elementary color regions, namely red strip region, green strip region and blue strip region, which are disposed in horizontal direction.

The feature of this prior art is that all the 320 beam control electrodes $15_a$, $15_2$ ... $15_{320}$ receive the beam control signals for displaying respective three primary colors, i.e., red and blue or green, at a same time. That is, at one moment, one horizontal line on the phosphor screen displays an image of red color parts and blue color parts of the line by impingements of red phosphor regions by odd number electron beams and impingements of blue phosphor regions by even number electron beams, at the next moment an image of green color part of the line, and at the next moment an image of red color parts and blue color part of the line by impingements of red color phosphors regions by even number electron beams and impingements of blue color phosphor regions by odd number electron beams. In this apparatus, the odd number electronic switches $35_1$, $35_3$, $35_5$ ... $35_{15}$ switch to feed signal in the order of R, G and B, and the even number

electronic switches $35_2$, $35_4$ . . . $35_{14}$ switch in the order of B, G and R.

The horizontal beam-focussing electrode 6 is impressed with a DC voltage and focusses the rod shaped electron beams in horizontal direction.

The horizontal deflection means 7 comprises strip electrodes 18, 18' . . . which are disposed at the positions in front of center positions between neighboring slits 16, 16 of the horizontal beam-focussing electrode 6. Each of the strip electrodes pair 18, 18' is impressed with 3-level changing voltage or a horizontal deflection signal, and horizontally deflects rod shaped electron beams, thereby making the rod shaped electron beams selectively impinge red phosphor regions, green phosphor regions or blue phosphor regions in turn.

In the example, where a horizontal row of 320 rod shaped electron beams impinge 320 sets of three primary color regions, one horizontal deflection range corresponds to one horizontal picture element width.

The horizontally disposed electrodes of the beam-acceleration means 8 are disposed at the height level corresponding to those of the composite body of vertical deflection electrodes 13 and 13' and are impressed with a DC voltage.

The phosphor screen 9 may be provided with known metal back layer (not shown) formed on the side of cathodes and a positive DC voltage is impressed thereon. In practical example, the phosphor regions are formed vertically oblong strips- of red color phosphor, . green color phosphor and blue color . phosphor. In Fig. 1, horizontal broken lines on the phosphor screen 9 show boundary lines between neighboring vertical divided segments to be impinged by electron beams of respective line cathodes. Vertical chain lines on the phosphor screen 9 show boundary lines between horizontally neighboring sets of three primary color phosphor strips.

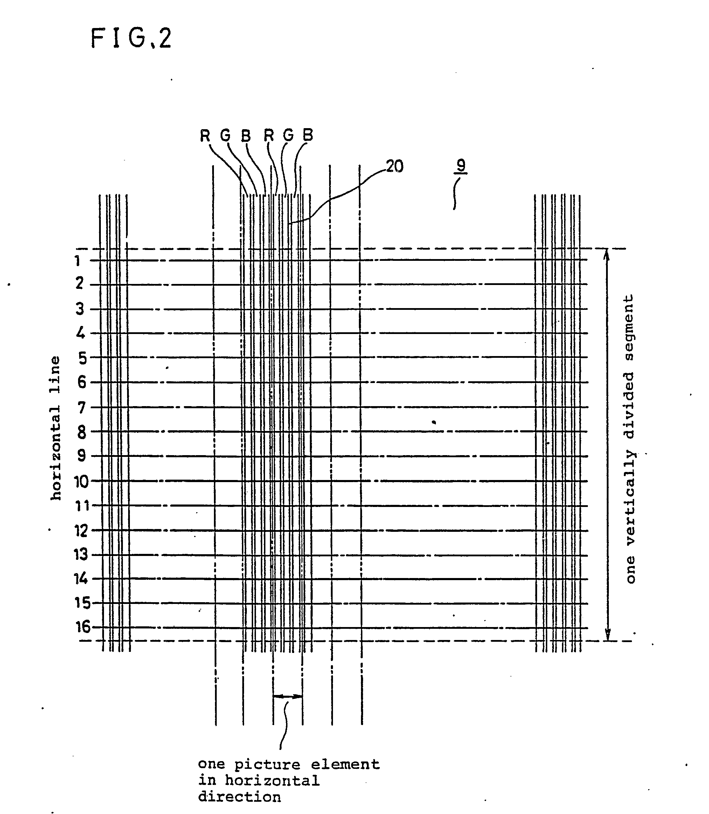

A small segment 20, which is defined by two neighboring vertical chain lines and two neighboring horizontal broken lines, is shown enlarged in schematic view of Fig. 2, wherein the small segment 20 has 16 horizontal lines in vertical row. In an actual example, one segment has the size of 16 mm high in vertical direction and 1 mm width in horizontal direction, and in Fig. 1 the sizes are shown enlarged in widthwise direction as has been mentioned.

Apart from the above-mentioned example where 320 sets of three primary color phosphor regions are formed widthwise of the phosphor screen for 320 rod shaped electron beams produced by 320 slits 14 of the beam-control electrode 5 and 320 slits 16 of the horizontal beam-focussing electrode 6, such a modification may be made that for the 320 sets of three primary color phosphor regions, 160 rod-shaped electron beams are provided, and in this case the horizontal deflections signal is 6-level changing voltage which deflects the rod-shaping electron beam to sweep for the horizontal range of the color phosphor regions of RGBRGB, and each of the beam-control electrodes 5 also receives the control signal for two picture elements in sequence.

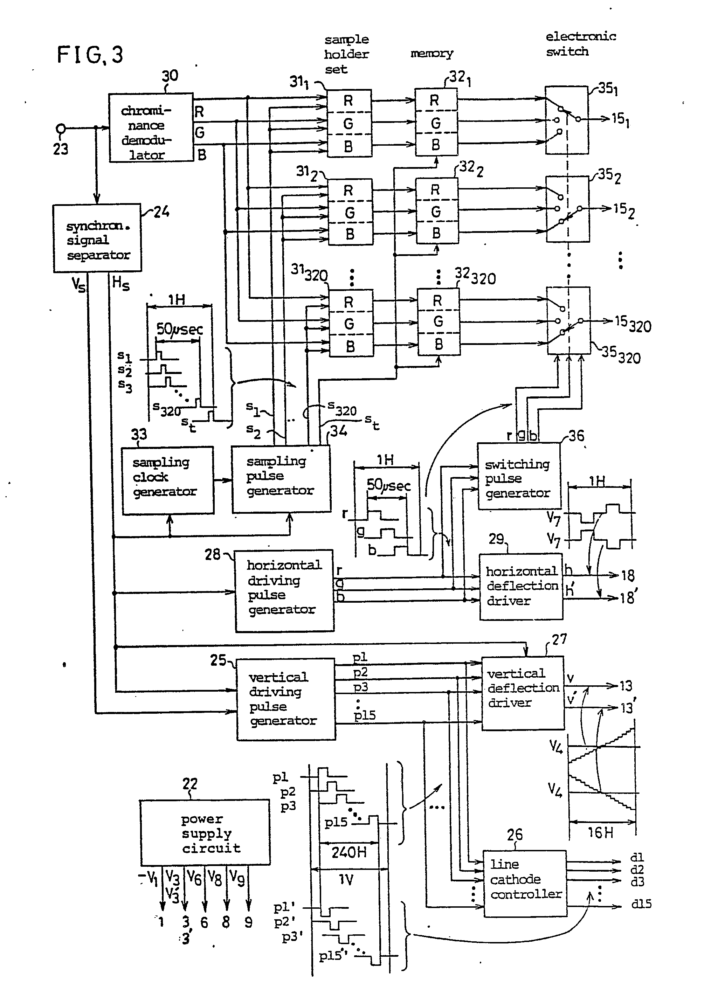

Fig. 3 shows a circuit block diagram of a fundamental electric construction of the apparatus of Fig. 1. The explanation starts from the part to drive the cathode ray tube to form a raster on its phosphor screen.

A power supply 22 is for impressing necessary voltages on various electrodes of the flat cathode ray tube of Fig. 1. The following DC voltages are supplied to the electrodes:

$-V_1$ to back electrode 1,
$V_3$ to vertical beam-focussing electrode 3,
$V_3'$ to vertical beam-focussing electrode 3',
$V_6$ to horizontal beam-focussing electrode 6,
$V_8$ to acceleration electrode 8,
$V_9$ to phosphor screen 9.

An input terminal 23 receives ordinary composite video signal and give it to a synchronizing signal separator 24 and to a chrominance demodulator 30. The synchronizing signal separator 24 separate and issues vertical synchronizing signal $V_s$ and horizontal synchronizing signal $H_s$. A vertical driving pulse generator 25 comprises a counter which count the horizontal synchronizing signal $H_s$ and is reset by the vertical synchronizing signal $V_s$, and issues 15 driving pulses p1, p2, p3 . . . p15, each having duty time of 16H (1H is the time period for one horizontal scanning). The fifteen pulses p1 to p15 are issued during an effective vertical sweep period, which is the time length of one vertical sweep period exclusive of vertical fly-back time and is of 240H time length. The driving pulses are then given to the line cathode controller 26, where they are inversed of polarity to produce pulses p1', p2', p3' . . . p15' falling down to 0V at respective inversed peak period (of 16H length) and retaining 20V for other period, and is fed to respective line cathodes 201, 202, 203 . . . 215. The line cathodes are always heated by a small voltage DC current so as to be able to emit electrons at any time, and the electrons are taken out, when the pulse of a selected line cathode is at its peak (0V), by means of positive electric field towards the vertical beam-focussing electrode 3 and subsequent other electrodes. For period other than the peak (0V) of the pulses impressed on a line cathode, because of negative electric field formed by impression of +20V thereon, the line cathodes do not emit electron beam. That is, one of the 15 line cathodes in turn emit electron beams. Therefore, the line cathodes are activated in turn from the top one 201 to the bottom one 215 each for 16H time period. The emitted electrons are driven forward to the vertical beam-focussing electrodes 3, 3' and focussed to form a horizontal sheet-shaped electron beam.

A vertical deflection driver 27 comprises a counter for counting horizontal synchronizing signal $H_s$ and is reset by the output pulses p1, p2 . . . p15 of the vertical driving pulse generator 25 and an A/D converter for A/D converting the count output. And the vertical deflection driver 27 issues a pair of vertical deflection signals v, v′, which are 16-step rising sawtooth wave and 16-step falling sawtooth wave, respectively, both having center voltage of $V_4$. These vertical deflection signals v and v′ are impressed on the upper vertical deflection electrodes 13 and the lower vertical deflection electrodes, respectively. Accordingly, the sheet shaped electron beams are vertically stepwisely deflected in 16 steps and repeat the same. And therefore, a horizontal line displayed on the phosphor screen stepwisely falls from top position to bottom position in 16 steps in one vertically divided segment $22_1$, $22_2$ ... or $23_5$ of Fig. 1.

Since the activation of the line cathodes is stepwisely shifted one by one downward every 16H time period, when the horizontal line on the phosphor screen comes down and arrives at the bottom of the first vertically divided segment $22_1$, the next moving of the horizontal line on the phosphor screen starts from the top position of the second vertically divided segment $22_2$, and the similar downward shifting of the horizontal line proceeds until the horizontal line arrives at the bottom of the 15th (lowest) vertically divided segment $23_5$, and the horizontal line goes back to the top of the first segment $22_1$. That is, the vertical deflection of the horizontal line continuously proceeds from the top (No. 1 horizontal line) to the bottom (No. 240, i.e., (15×16)th) of the phosphor screen 9, thereby forming a rastor of 240 horizontal lines.

The sheet-shaped electron beam is then divided into 320 rod-shaped electron beams having substantially round sections when passing through the vertically oblong slits 14, 14 ... of the beam-control electrode $15_1$, $15_2$ ... and vertically oblong slits 16, 16 ... of the horizontal beam-focussing electrode 6. The rod-shaped electron beams are controlled of their currents by means of voltage impressed on respective strip electrodes of the beam-control means 5, and further deflected by horizontal deflection means 7 so as to have one of three positions corresponding to R, G and B regions of the phosphor screen 9 by means of the horizontal deflection signals given by the horizontal deflection driver 29.

A horizontal driving pulse generator 28 comprises three stages of sequentially connected monostable multivibrators the first stages of which is triggered by horizontal synchronizing signal $H_s$. And the horizontal driving pulse generator issues three pulses r, g and b of the same pulse widths. For one example, an effective horizontal scanning period of 50μ sec. is divided into 3 periods for the pulses r, g and b, accordingly, the pulses, r, g and b have 16.7μ sec. pulse width each. The horizontal driving pulses r, g and b are given to the horizontal deflection driver 29, which is switched by the horizontal driving pulses r, g and b and issues a pair of horizontal deflection signals h and h′. These horizontal deflection signals h and h′ are three step rising signal and three step falling signal, respectively, and, both have the same center voltage $V_7$. These horizontal deflection signals h and h′ are given to the horizontal deflection electrodes 18, 18, 18 ... 18′, 18′, 18′ ... dispose alternately in the horizontal deflection means 7. As a result, 320 rod-shaped electron beams are deflected at the same time to R, G or B regions on a same horizontal line of the phosphor screen.

It should be noted that in the construction shown in and elucidate referring to Fig. 1, the number of strip electrodes 18, 18′ ... of the horizontal electrodes are 320 for the 320 rod-shaped electron beams, and the strip electrodes 18, 18′ ... are alternately connected to the output terminals h and h′ of the horizontal deflection driver. Accordingly, the electric fields of horizontal deflection gaps defined by neighboring two strip electrodes 18 and 18′ are not of the same direction. Namely, the directions of electric field of the horizontal deflection gaps are alternatingly opposite each other for neighboring horizontal deflection gaps. The effect of this alternatingly opposite electric field is compensated as will be elucidated later.

Thus, the horizontal line on the phosphor screen at one time displays red image at the same time, at the next time green image at the same time and at the next time blue image at the same time, and at the next time the line proceed to the next lower line whereon the same is repeated.

The beam intensity control is made as follows:

The input composite video signal received at the input terminal 23 is given to the chrominance demodulator 30 where color differential signals R-Y and B-Y are demodulated and G-Y is also produced by known matrix circuit therein, and by processing these color differential signals with a luminance signal Y, primary color signals R, G and B are produced. The primary color signals R, G and B are given to 320 sets of sample-hold means $31_1$, $31_2$ ... $31_{320}$, each comprising three elementary sample-hold circuits for R, G and B color signals. The output signals of the 960 elementary sample-hold circuits are given to 320 sets of memory means $32_1$, $32_2$ ... $32_{320}$, each comprising three memories for R, G and B color signals.

On the other hand a sampling clock generator 33 comprises PLL (phase locked loop) circuit, and issues sampling clock pulses of 6.4 MHz, which is controlled to have a predetermined phase difference against the horizontal synchronizing signal $H_s$. The sampling clock pulses are given to the sampling pulse generator 34, wherein by means of, for example, a shift register of 320 stages, 320 sampling pulses $S_1$, $S_2$ ... $S_{320}$, each having phase difference by 50μ sec/320 time inbetween, are produced and given to the sample hold circuits $31_1$, $31_2$ ... $31_{320}$, respectively. After the last sampling pulse $S_{320}$, a transferring pulse $S_t$ is issued from the sampling pulse generator 34 to the memories $32_1$, $32_2$ ... $32_{320}$. The sampling pulses $S_1$, $S_2$ ... $S_{320}$ correspond to 320 picture elements in the horizontal direction on the phosphor screen 9, and their timings are controlled so as to have a constant relation with respect to the horizontal synchronizing signal $H_s$. By impressing the 320 sets of sampling pulses to respective 320 sets of sample-hold circuits, the sample-hold circuits $31_1$, $31_2$ ... $31_{320}$ sample and hold R, G and B information of video signals therein. After finishing of the sample-hold for one horizontal line, upon receipt of the transfer signal $S_t$ by the memories, the sample-hold informations are transferred at one time to the memories $32_1$, $32_2$ ... $32_{320}$, and retained there for the next one horizontal scanning period (H=63.5µ sec).

The R, G and B information of the video signal for the one horizontal line stored in the memories $32_1$, $32_2$ ... $32_{320}$ are led to 320 electronic switches $35_1$, $35_2$ ... $35_{320}$, which are electronics switches comprising analog gate circuits for selectively leading the stored signals of a color R, G or B to the respective strip electrodes $15_1$, $15_2$ ... $15_{320}$ of the beam control means 5. The switching circuits $35_1$, $35_2$ ... $35_{320}$ are simultaneously switched, being controlled by switching pulses given from a switching pulse generator 36, which is controlled by the output pulses r, g and b of the horizontal driving pulse generator 28. The electronic switches $35_1$, $35_2$ ... $35_{320}$ switch every 16.7µ sec (=50µ sec/3) for selectively leading the video signal information of R, G and B color in turn each for 16.7µ sec.

In the switching, the switching circuits of the odd number orders are switched in the order of R→G→B while the switching circuits of the even number orders are switched in the order of B→G→R, so that the effect of the alternatingly opposite directed electric fields produced by the horizontal deflection means 7 is compensated.

Hereupon it should be noted that timing (phases) of the switchings of the electronic switches $35_1$, $35_2$ ... $35_{320}$ and the horizontal deflection driver 29 should be completely synchronized with each other, in order to avoid poor color impurity caused by undesirable mixing of a color signal with other color signals.

As a result of the operation as has been elucidated, the phosphor screen displays red color image of one horizontal line at one time, followed by green color image of the horizontal line for 320 picture elements at one time and further followed by blue color image of the horizontal line at one time, and then the same displaying is made proceeding to the next (lower) line, and thus displaying of one field having 240 horizontal line is completed. And the displayings of the fields are repeated and television picture is obtainable on the phosphor screen 9.

The primary colors of the phosphor regions are not necessarily limited to the combination of the R, G and B, but any other combination as the primary color of phosphors may be usable.

In the above-mentioned description, the words "horizontal" and "vertical" are used to imply that "horizontal" is the direction that the lines are displayed on the phosphor screen, and "vertical" is the direction that the displayed line is shifted to the next line to form a raster, and accordingly these words are not bound to the absolute spatial relation of the screen.

The above-mentioned apparatus can provide a color television apparatus of very flat and compact type, and a sufficiently bright and clean display image is ensured since known combination of the color phosphors and scanning cathode ray beams is used.

However, the above-mentioned inventors' prior art apparatus has the following technical problem. A first problem is that depending on dispersions of capacitances of capacitors used as analog memory in the sample hold circuits $31_1$, $31_2$ ..., the output levels disperse. A second problem is that the sampling clock are not necessarily stable. Unless the stability is improved by, for instance, utilizing PLL circuit, the unstability factor of the clock signal results in horizontal non-lineality of the deflection, if there is expansion and contraction of the displayed image or low color impurity due to inaccurate impingement by electron beams on partly erroneous color phosphors. However, an independent stable PLL circuit is constituted, the cost of the circuit becomes very much expensive since quartz oscillator of very high stability as reference oscillator is necessary.

Summary of the invention

It is an object of the present invention to provide a television set or the like appliance with a flat shaped display apparatus of line at a time displaying type which comprises a more economical and sufficiently stable circuit.

In accordance with the present invention this object is achieved by the features of the characterising portion of claim 1.

The present invention enables to display color image of a high quality with accurate chrominance controlling.

The present invention utilizes digital memory means as memory means to store data of video information for one horizontal scanning period, having very high accuracy without dispersion to effect on the displayed image, and by utilizing pulse width modulation in electron beam control a very high quality image display is obtainable. Furthermore, clock pulses for use in the A/D converter and pulse width modulator are produced by utilizing frequency multiplication of color sub-carrier, thereby dispensing with expensive reference oscillator.

Brief explanation of the drawing

Fig. 1 is an exploded perspective view of a principal part, with its vacuum enclosure removed, of a video image display apparatus to embody the present invention, expanded of its size in the horizontal direction in comparison with the vertical direction for easier drawing of minute constructions.

Fig. 2 is a schematic front view of a phosphor screen of the apparatus of Fig. 1.

Fig. 3 is a circuit block diagram showing an inventors' prior art of electric circuit configuration to operate the apparatus of Fig. 1.

Fig. 4 is a fundamental circuit block diagram showing a preferred example of electric circuit embodying the present invention for operating the apparatus of Figs. 1 and 2.

Fig. 5 is a circuit block diagram of memory part of the apparatus shown in Fig. 4.

Fig. 6 is a circuit diagram of 1-bit part of the memory of Fig. 5.

Fig. 7 is a timing chart showing waveforms of various parts of Fig. 6.

Fig. 8 is a circuit diagram of a PWM circuit to be used in the circuit of Fig. 4.

Fig. 9 is a circuit diagram of a reset pulse generator for generating reset pulses for the PWM circuit.

Fig. 10 is a fundamental circuit diagram showing another preferred example of electric circuit for the apparatus of Fig. 1 and Fig. 2.

Description of the preferred embodiments

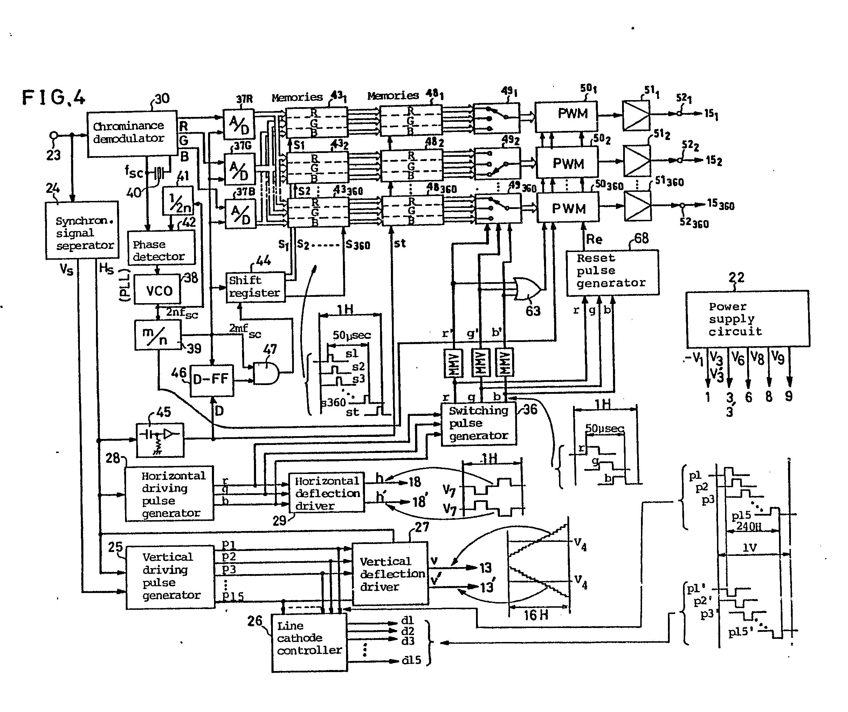

Circuit configuration for operating the image display apparatus shown in Figs. 1 and 2 is shown in Fig. 4. The circuit of Fig. 4 is identical to that of Fig. 3 in horizontal deflection circuit part, vertical deflection circuit part and line cathode driving part, but differs in signal demodulation part.

An input terminal 23 receives ordinary composite video signal and give it to a synchronizing signal separator 24 and to a chrominance demodulator 30. The synchronizing signal separator 24 separates and issues vertical synchronizing signal $V_s$ and horizontal synchronizing signal $H_s$. Configuration and mutual connection of the input terminal and output terminal of the vertical driving pulse generator 25 and horizontal driving pulse generator 28 are substantially the same to that of Fig. 3.

However, in the construction shown in and elucidated referring to Fig. 4, the number of strip electrodes 18, 18' ... of the horizontal electrodes are 360 for the 360 rod-shaped electron beams.

· The circuit for beam intensity control is made as follows:

The input composite video signal received at the input terminal 23 is given to the chrominance demodulator 30 where primary color signals R, G and B are demodulated and G-Y is also produced by a known matrix circuit therein. The color decoded primary color signals R, G and B are input to A/D converters 37R, 37G and 37B. The A/D converters 37R, 37G and 37B may be of general purpose type, and that of 6—8 bit is used.

A feature of the present invention lies in the belowmentioned generation of clock signal.

Clock signal for operating the A/D converters 37R, 37G and 37B are fed from a voltage controlled oscillator 38 through a frequency divider 39. Frequency of the clock signal for the A/D converter is derived from a color subcarrier oscillator 40 in the color decoding circuit 30, and· is set to be a frequency of 2m-times-multiplication of the color sub-carrier $f_{sc}$, where "m" is a natural number. On the other hand, a frequency divider 41 divides frequency of output signal of the voltage controlled oscillator 38 into 1/2n, where "n" is a natural number equal to or larger than "m". The output of the frequency divider 41 is compared with the output of the color sub-carrier by the phase detector 42. And output of the phase detector 42 is fed to the voltage controlled oscillator 38. And thereby, a phase locked loop (PLL circuit) oscillates with a frequency of $2nf_{sc}$ in synchronization with the color sub-carrier. Now, provided that m=n=1, then $2nf_{sc}$=7.16 MHz. Thus, possible number of data sampling for effective video information within one horizontal scanning period becomes 360. Accordingly, the clock pulses are fed to the A/D converters 37R, 37G and 37B at a rate of 360 pulses within the effective horizontal scanning period (50 μsec), and then at each time 6 bit digital primary color signals are issued.

Output digital primary color signals from the A/D converters 37R, 37G and 37B are led to and stored in memories R parts, memories G parts and memories B parts of 360 set memories $43_1$, $43_2$ ... $43_{360}$ which are for storing digital data for horizontal scanning lines 1, 2, ... 360, respectively. Each unit memory part, for instance, memory R, memory G, or memory B in a memory part for one line such as $43_j$ is a simple data latch circuit to memorize 6 bits in parallel. Latching pulse $S_1$, $S_2$ ... $S_{360}$ are fed from a shift register 44 which serves as a sampling pulse generator. When m=n=1 as provided above, the shift· register 44 is ·a 360 stage parallel output shift register, which is fed with clock signal of a frequency $mf_{sc}$ from the frequency divider 39. A start pulse of the shift register 44 is a pulse having a width of one clock pulse of the frequency $mf_{sc}$. This is produced by differentiating by a differentiation circuit 45 a rear edge of horizontal synchronization signal issued from the synchronization signal separator 24 and converted into longer pulses of an appropriate duty period by means of a D-flip-flop 46 so as to continue until starting of an actual video information, and the pulses are input to an AND gate 47 together with a clock signal of the $mf_{sc}$ frequency from the frequency divider 39. In actual circuit, the wave shaping or prolonging of the pulse may be made by only passing one D-flip-flop 46.

Output of the differential circuit 45 is also used as a signal to transfer the contents data of the memories $43_1$, $43_2$ ... $43_{360}$ into subsequent memories $48_1$, $48_2$, ... $48_{360}$ which are connected respectively from the former. The subsequent memories $48_1$, $48_2$ ... $48_{360}$ are read out by corresponding multiplexer selection circuits $49_1$, $49_2$ ... $49_{360}$ at a time within one horizontal fly back period to input the data to the corresponding PWM circuits $50_1$, $50_2$ ... $50_{360}$ by control of switching pulse r', g' and b' which are given from the switching pulse generator 36 through each one monomulti-vibrator.

Pulse width modulated signals for red, green and blue primary color signals from the PWM

circuit $50_1$, $50_2$ ... $50_{360}$ are amplified by responding amplifiers $51_1$, $51_2$ ... $51_{360}$ and output from the output terminals $52_1$, $52_2$ ... $52_{360}$, and are given to the horizontal deflection electrodes $15_1$, $15_2$ ... of Fig. 1, respectively. The PWM circuits $50_1$, $50_2$ ... $50_{360}$ are controlled by clock pulses which are fed from the frequency divider 39. Circuit configuration of this apparatus can be simple since clock signal of $2mf_{sc}$ is fed from the same signal to be fed to the A/D converter 37R, 37G and 37B.

If a clock signal of a frequency of $2nf_{sc}$ is intended to be used for the PWM circuit, output signal of the voltage controlled oscillator 38 as such can be used only with some appropriate impedance conversion.

Instead of using the primary color output signal of the color decoder circuit 30 to be fed to the A/D converters 37R, 37G and 37B, it is possible to use a signal obtained by A/D conversion of composite video signal as such by using clock signal followed by digital decoding to obtain the same effect.

Since the outputs of the PWM circuits $50_1$, $50_2$ ... $50_{360}$ are generally of a logic level, which is very low, they are amplified by pulse amplifiers $51_1$, $51_2$ ... $51_{360}$ so that the output levels are agreeable to saturation levels and cut off levels of the control electrodes $15_1$, $15_2$ ..., so as to control the electron beams.

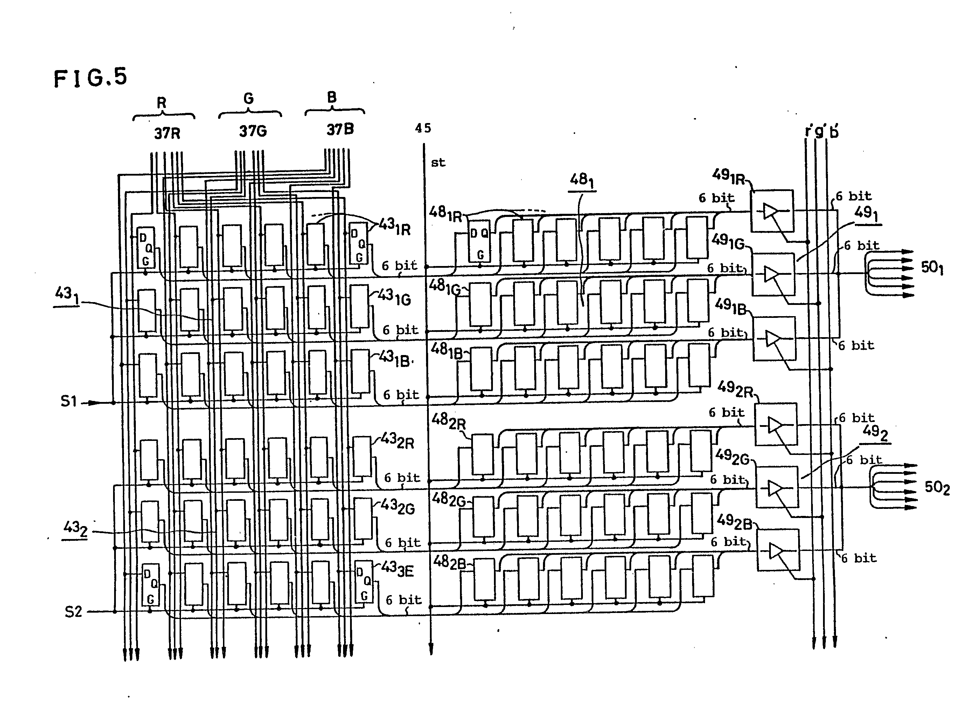

Actual circuit configuration of the memory circuit and their operations are elucidated with reference to Fig. 5 to Fig. 9. In the elucidation it is provided that A/D converters 37R, 37G and 37B are issuing 6 bit output signals.

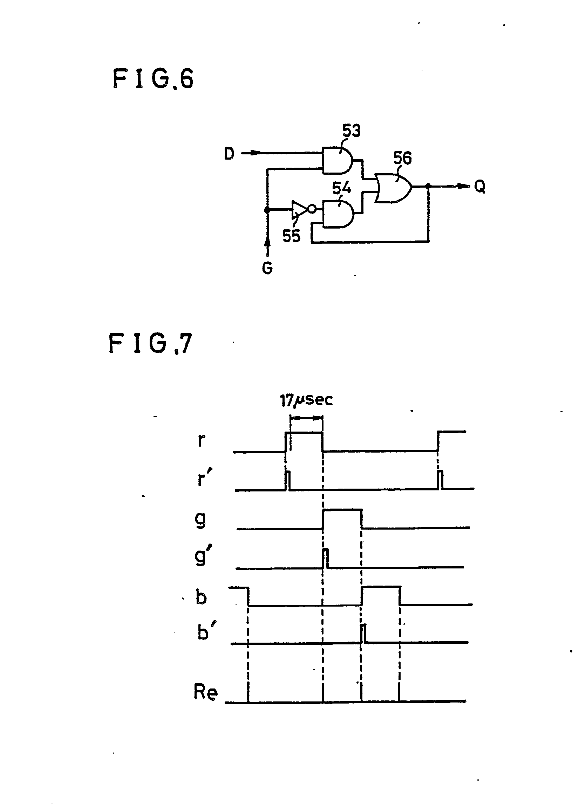

Fig. 5 shows an example of circuit of memories $43_1$, $43_2$ ... $43_{360}$, memories $48_1$, $48_2$ ... $48_{360}$ and switching circuits $49_1$, $49_2$ ... $49_{360}$. The memories $43_1$ to $43_{360}$ and $48_1$ to $48_{360}$ are constituted with data latch circuits $43_{1R}$, $43_{1G}$, $43_{1B}$, $43_{2R}$, $43_{2G}$, $43_{2B}$ ... $48_{1R}$, $48_{1G}$, $48_{1B}$, $48_{2R}$, $48_{2G}$, $48_{2B}$ ... for respective bits, and Fig. 6 shows an example of each unit memory. The circuit of Fig. 6 is formed with AND gates 53 and 54, inverter 55 and OR gate 56, wherein input signal at a data input terminal D is conveyed to output terminal Q only when a H data latch pulse is impressed on the gate terminal G, while at a negative edge of data latch pulse the input signal is latched thereby outputting memorized output signal to the output terminal Q.

Latch pulses s1, s2 ... s360 are output pulses of the shift register 44 and they are given to 360 memories in the memory set $43_1$ to $43_{360}$ one by one in sequence within one horizontal scanning period. Accordingly, the A/D converted digital primary color signals are memorized into 360 memories $43_1$, ... $43_{360}$ within one horizontal scanning period. The memory $43_1$ stores data for the leftest part picture element and memory $43_{360}$ stores data for the rightest picture element.

The stored are present at the data latch output terminals Q of Fig. 6, and are given to the input terminals D of the next memories $48_1$ ... $48_{360}$. The memories $48_1$ ... $48_{360}$ are constituted with the same unit data latch circuit shown in Fig. 6 like the memories $43_1$ to $43_{360}$. The latch pulses of the memories $48_1$ to $48_{360}$ are data transfer pulses st, which is fed from the differential circuit 45 to all terminals of the memories $48_1$ to $48_{360}$. That is the stored data of the memories $43_1$ to $43_{360}$ are transferred by means of the data transfer pulse to the memories $48_1$ to $48_{360}$ are same time.

The switching circuit $49_{1R}$ or $49_{1G}$ or $49_{1B}$ or ... represents six switching circuits, but only one switching circuit $49_{1R}$, $49_{1G}$, $49_{1B}$, $49_{2R}$, $49_{2G}$ or $49_{2B}$, is drawn in Fig. 5 as the representative for 6 switching circuits respectively for 6 memories of $48_{1R}$ or $48_{1G}$ or .... That is, in actual apparatus, six switching circuits are connected to respective output terminals of the six memories of each row $48_{1R}$ or $48_{1G}$ or .... As the switching circuits, tristate buffer circuit can be used. The switching control signals r', g' and b' are given with timings shown in Fig. 7. These signals r', g' and b' are produced by extending the input time of the output pulses r, g and b of the switching pulse generator 36 by means of monomultivibrator MMV. Thereby, the switching circuits $49_1$, $49_2$ ... $49_{360}$ in sequence switches digital primary color signals R, G and B in that sequence, and the read out data are fed to the PWM circuit $50_1$, $50_2$ ... $50_{360}$ within duty times of each pulse of switching pulses r', g' and b'.

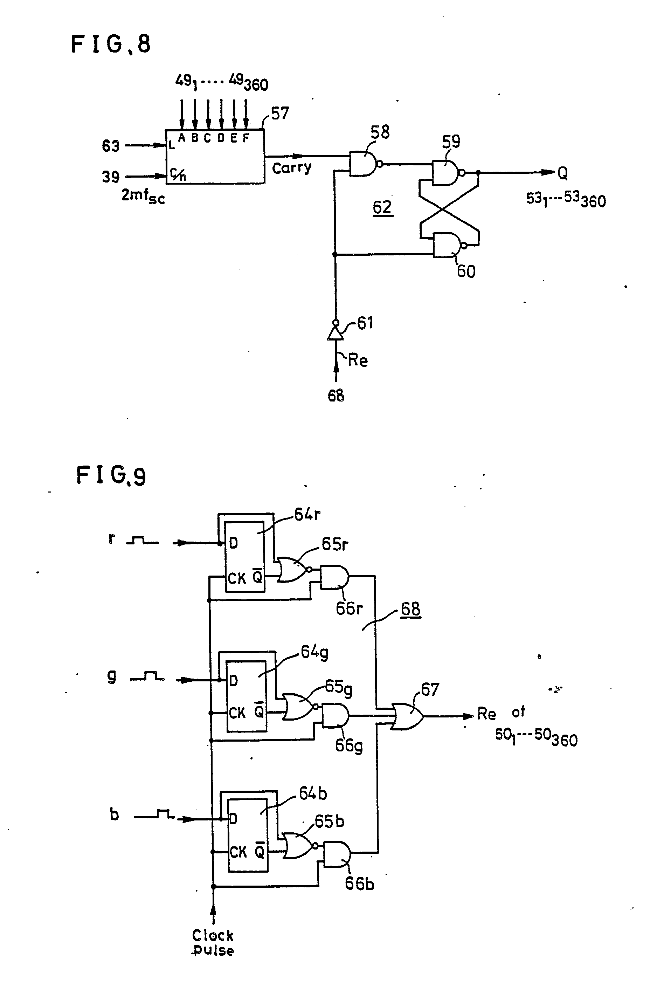

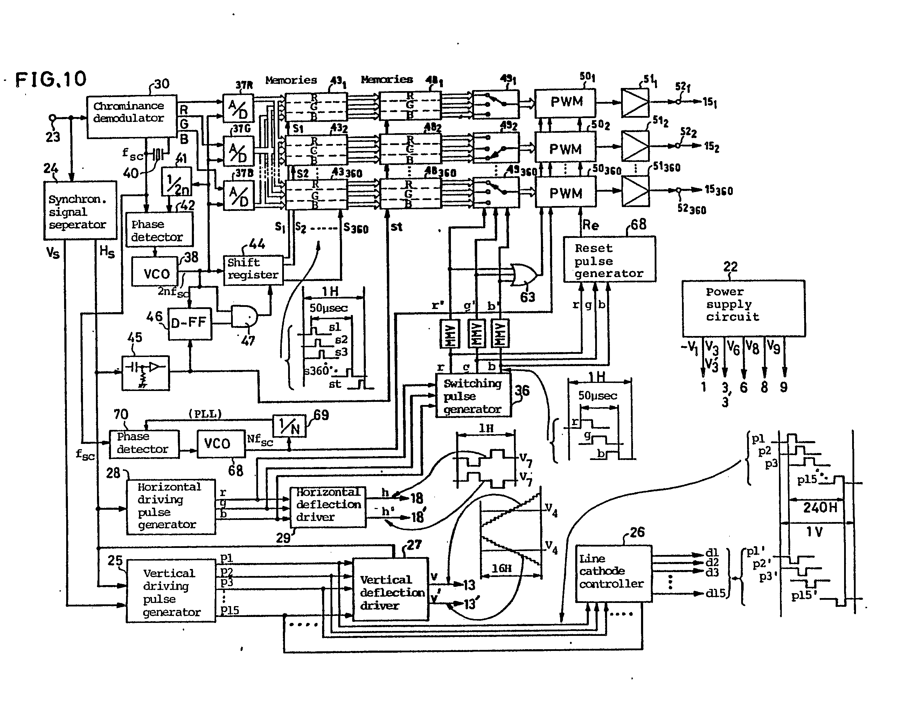

The PWM circuits $50_1$ to $50_{360}$ are each constituted as shown in Fig. 9 with 6 bit presettable counter 57 and a reset preference RS-flip-flop 62 consisting of NAND gates 58, 59 and 60 and an inverter 61. Digital primary color signal data of each picture element selected by the switching circuit $49_1$, $49_2$ ... are given to the presettable counter 57 as preset data. At the same time, by impressing the switching pulses r', g' and b' through OR gate 63 of Fig. 4 on load terminal of the preset counter 57, digital primary color signals selected by the switching circuit $49_1$, $49_2$ ... are preset in the counter 57. Clock signal of frequency $f_{sc}$ from the color sub-carrier generator 39 is counted by the presettable counter 57, and the reset preference RS-flipflop 62 is set by the carrier output. Accordingly, the larger the primary color signal is, the shorter the time from the incoming of load pulse to the time of the setting comes. On the other hand, as shown in Fig. 8, reset pulse RE to be impressed to the inverter 61 is produced by a reset pulse generator 68, which comprises D-flipflop 64r, 64g and 64b driven by the switching pulses r, g and b and clock pulse of $2mf_{sc}$ and NOR gates 65r, 65g and 65b, AND gates 66r, 66g and 66b, and OR gates 67; and the reset pulse RE resets the flipflop 62.

As a result, the PWM circuit of Fig. 8 issues output pulses which are pulse-width modulated responding to instantaneous signal level of three primary color signals within one horizontal scanning period of about 50 μsec in the order of digital red signal, digital green signal and digital blue signal; and the output digital primary color signals have rear edges fixed at time points of negative edges of the switching pulses r, g and b, and front edges of the digital primary color signals are shifted responding to the levels of the primary color signals from the switching circuits $49_1$, $49_2$ ... $49_{360}$. The maximum pulse width of the digital primary color signals are 16.6 µsec which is defined by $1/f_{sc}$ (sec)×64 (bits).

In this way, the PWM circuits $50_1$ ... $50_{360}$ issue pulse width modulated primary color signals and these outputs are amplified by pulse amplifier $51_1$ ... $51_{360}$ to a desired level, so that the PWM signal can control the 360 electron beams by impressions on the control electrodes $15_1$ ... $15_{360}$. Thus a color picture is displayed on the phosphor screen.

In the above-mentioned example, the oscillation frequency of the voltage controlled oscillator 38 of the PLL circuit, which is synchronized to the color sub-carrier, is selected as $2n \cdot f_{sc}$, and on the other hand as a signal to be impressed on the A/D converters 37R, 37G and 37B, and on shift register 44 for making data latch pulses a signal having frequency of $2m \cdot f_{sc}$, which is obtained from the divider 39, is used; but in case the condition is selected to be n=m, then the frequency divider 39 can be removed.

Fig. 10 shows another example of the present invention. In this example, the PLL circuit consists of a voltage controlled oscillator 68, a frequency divider 69 which divide the frequency of the voltage controlled oscillator 68 into 1/N (where "N" is a natural integer), and a phase detection circuit 70 for phase-detecting the color sub-carrier signal $f_{sc}$ from the color sub-carrier oscillator 40 and the divided output to make the voltage controlled oscillator 68 oscillate in synchronism with the color sub-carrier signal $f_{sc}$ to produce an output of $N \cdot f_{sc}$. Accordingly, the voltage controlled oscillator issues a clock pulse signal of the frequency $N \cdot f_{sc}$ which has a frequency made by multiplying the $f_{sc}$ with natural integer "N" and is synchronized with the color sub-carrier, therewith PWM circuit $50_1$ ... $50_{360}$ can be driven.

As has been elucidated referring to preferred embodiments, the present color image display apparatus in accordance with the present invention makes A/D conversion of chrominance signal of color television signal into digital color signals and store them in memory means and thereafter reading the stored data and makes a PWM signal which is made by pulse width modulating responding to the stored data, and a plural number of a electron beams corresponding to divided segments of phosphor screen are controlled with these PWM signal. Therefore, as a result of utilization of the digital color signal and PWM signal controlling of the electron beam, accurate reproduction of color images can be attainable.    •

Furthermore, by utilizing a signal of color sub-carrier frequency synchronized thereto, a very accurate clock signal suitable for the PWM circuit is obtainable only with simple PLL circuit. Accordingly, an accurate display of color image is attainable.

**Claims**

1. An image display apparatus comprising a clock signal generator means (38) for generating a clock signal having a frequency of an integer-times-multiplication of a frequency of a television signal; A/D conversion means (37) for converting said television signal into digital signals by utilizing said clock signal; memory means (43) for storing said digital signals until the next end of the horizontal scanning period; PWM means (50) for converting said digital signals read out from said memory means (43) into pulse-width modulated signals and image display means for displaying an image by utilizing said pulse-width modulated signals; characterized in that the image display apparatus is a color image display apparatus for displaying a color image; that said clock signal generator means is provided for generating a clock signal having a frequency of an integer-times-multiplication of a color sub-carrier of color television signal and being synchronized to said color sub-carrier; that said A/D conversion means (37) converts said color television signal into digital primary color signals; that said memory means (43) stores said digital primary color signal; said PWM means (50) convert said digital primary color signals into pulse-width modulated primary color signals for displaying a color image.

2. A color image display apparatus in accordance with claim 1, wherein said clock signal generator constitutes a phase locked loop circuit (38, 41, 42), which produces clock signals for said A/D conversion means (37) and said PWM means (50) by frequency-dividing of phased locked said color signal.    •

3. A color image display apparatus in accordance with claim 1, wherein said chrominance signal consists of red, green and blue primary color signals and said digital chrominance signal consists of digital chrominance signals for red, green and blue primary colors, and said memory means comprises first memory (43) for storing said digital chrominance signals for red, green and blue primary colors until the next horizontal scanning period, second memory (48) for storing data of said first memory and signal transporting means for transporting data of said first memory into said second memory at the same time within a flyback period of the horizontal scanning, data in said second memory being pulse-width modulated by said PWM means (50) within at least a part of the next flyback period of the horizontal scanning.

4. A color image display apparatus in accordance with claim 1, wherein the same clock signal are fed to said A/D conversion means (37) and to said PWM means (50).

5. A color image display apparatus in accordance with claim 1, wherein a first clock signal which is produced by first-integer-times multiplication of the color sub-carrier is fed to said A/D conversion means (37) and a second clock signal which is produced by second-integer-times multiplication of the color sub-carrier is fed to said PWM means (50).

## Patentansprüche

1. Bildanzeigevorrichtung, umfassend eine Taktsignalgeneratoreinrichtung (38) zur Erzeugung eines Taktsignales mit einer Frequenz, die ein ganzzahliges Vielfaches einer Frequenz eines Fernsehsignales ist; eine Analog-Digital-Umsetzeinrichtung (37) zur Umsetzung des Fernsehsignals in digitale Signale mit Hilfe des Taktsignales; eine Speichereinrichtung (43) zur Speicherung der digitalen Signale bis zum nächsten Ende der horizontalen Abtastperiode; eine Impulsbreitenmodulationseinrichtung (50) zur Umsetzung der aus der Speichereinrichtung (43) ausgelesenen digitalen Signale in impulsbreitenmodulierte Signale, und eine Bildanzeigeeinrichtung zur Darstellung eines Bildes mit Hilfe der impulsbreitenmodulierten Signale; dadurch gekennzeichnet, daß die Bildanzeigvorrichtung ein Farbbildanzeigegerät zur Darstellung eines Farbbildes ist; daß die Taktsignalgeneratoreinrichtung zur Erzeugung eines Taktsignales vorgesehen ist, das eine ganzzahlig vervielfachte Frequenz eines Farbhilfsträgers eines Farbfernsehsignales aufweist und mit dem Farbhilfsträger synchronisiert ist; daß die Analog-Digital-Umsetzeinrichtung (37) das Farbfernsehsignal in digitale primäre Farbsignale umsetzt; daß die Speichereinrichtung (43) das digitale primäre Farbsignal speichert; und daß die Impulsbreitenmodulationseinrichtung (50) die digitalen primären Farbsignale in impulsbreitenmodulierte, primäre Farbsignale zur Darstellung eines Farbbildes umsetzt.

2. Bildanzeigevorrichtung nach Anspruch 1, dadurch gekennzeichnet, daß die Taktsignalgeneratoreinrichtung einen "phasens tarren" Regelkreis (38, 41, 42) bildet, der Taktsignale für die Analog-Digital-Umsetzeinrichtung (37) und die Impulsbreitenmodulationseinrichtung (50) durch Frequenzteilung des Phasenstarren Farbsignales erzeugt.

3. Bildanzeigevorrichtung nach Anspruch 1, dadurch gekennzeichnet, daß das Chrominanzsignal aus primären Rot-, Grün- und Blausignalen und das digitale Chrominanzsignal aus digitalen Chrominanzsignalen für die Primärfarben Rot, Grün und Blau besteht, und daß die Speichereinrichtung einen ersten Speicher (43) zur Speicherung der digitalen Chrominanzsignale für die Primärfarben Rot, Grün und Blau bis zur nächsten horizontalen Abtastperiode, einen zweiten Speicher (48) zur Speicherung der Daten aus dem ersten Speicher und eine Signalübertragungseinrichtung zum Übertragen der Daten aus dem ersten Speicher in den zweiten Speicher zur gleichen Zeit während der Rücklaufzeit der horizontalen Abtastung umfaßt, wobei Daten in dem zweiten Speicher durch die Impulsbreitenmodulationseinrichtung (50) während wenigstens eines Teiles der nächsten Rücklaufperiode der horizontalen Abtastung impulsbreitenmoduliert werden.

4. Bildanzeigvorrichtung nach Anspruch 1, dadurch gekennzeichnet, daß die gleichen Taktsignale an die Analog-Digital-Umsetzeinrichtung (37) und an die Impulsbreitenmodulationseinrichtung (50) abgegeben werden.

5. Bildanzeigevorrichtung nach Anspruch 1, dadurch gekennzeichnet, daß ein erstes Taktsignal, das durch eine erste ganzzahlige Multiplikation des Farbhilfsträgers erzeugt wurde, an die Analog-Digital-Umsetzeinrichtung (37) abgegeben wird, und ein zweites Taktsignal, das durch eine zweite ganzzahlige Multiplikation des Farbhilfsträgers erzeugt wurde, an die Impulsbreitenmodulationseinrichtung (50) abgegeben wird.

## Revendications

1. Appareil de reproduction d'images comprenant un moyen (38) de générateur de signaux d'horloge pour produire un signal d'horloge ayant une fréquence multiple un nombre entier de fois d'une fréquence d'un signal de télévision; un moyen de conversion analogique/numérique (37) pour transformer le signal de télévision en signaux numériques par utilisation du signal d'horloge; un moyen de mémoire (43) pour stocker les signaux numériques jusqu'à la fin suivante de la période de balayage horizontale, un moyen de modulation en largeur d'impulsion (50) pour convertir les signaux numériques extraits du moyen de mémoire (43) en signaux modulés en largeur d'impulsion et un moyen de visualisation d'image, pour afficher une image par utilisation des signaux modulés en largeur d'impulsion; caractérisé en ce que: l'appareil de reproduction d'images est un appareil de reproduction d'images en couleur pour afficher une image en couleur; le moyen de générateur de signaux d'horloge est prévu pour produire un signal d'horloge ayant une fréquence égale à un nombre entier de fois celle d'une sous-porteuse en couleur du signal de télévision en couleur et est synchronisé à la sousporteuse en couleur; le moyen de conversion analogique/numérique (37) convertit le signal de télévision en couleur en signaux numériques de couleur primaire; le moyen de mémoire (43) stoke le signal numérique de couleur primaire; le moyen de modulation en largeur d'impulsion (50) convertit les signaux numériques de couleur primaire en signaux de couleur primaire modulés en largeur d'impulsion pour affichage d'une image en couleur.

2. Appareil de reproduction d'images en couleur selon la revendication 1, caractérisé en ce que:

— le générateur de signaux d'horloge constitue un circuit à boucle bloquée en phase (38, 41, 42), qui produit des signaux d'horloge pour le moyen de conversion analogique/numérique (37) et le moyen de modulation en largeur d'impulsion (50) par division en fréquence du signal de couleur bloqué en phase.

3. Appareil de reproduction d'images en couleur selon la revendication 1, où:

— le signal de chrominance est constitué de signaux de couleur primaire, rouge, verte et bleue et le signal numérique de chrominance est constitué de signaux numériques de chrominance pour les couleurs primaires rouge, verte et bleue;
— le moyen de mémoire comprend une première mémoire (43) pour stocker les signaux numériques de chrominance pour les couleurs primaires rouge, verte et bleue, jusqu'à la période suivante de balayage horizontale, une seconde mémoire (48) pour stocker des données de la première mémoire et un moyen d'acheminement de signaux pour transporter des données de la première mémoire et les entrer dans la seconde mémoire pendant la période de retour de spot du balayage horizontal, des données dans la seconde mémoire étant modulées en largeur d'impulsion par le moyen de modulation en largeur d'impulsion (50) pendant au moins une partie de la période suivante de retour de spot du balayage horizontal.

4. Appareil de reproduction d'images en couleur selon la revendication 1, où:

— les mêmes signaux d'horloge sont appliqués au moyen de conversion analogique/numérique (37) et au moyen de modulation en largeur d'impulsion (50).

5. Appareil de reproduction d'images en couleur selon la revendication 1, où:

— un premier signal d'horloge qui est produit par une première multiplication par un nombre entier de la sousporteuse de couleur est appliqué au moyen de conversion analogique/numérique (37) et un second signal d'horloge qui est produit par une seconde multiplication par un nombre entier de la sous-porteuse de couleur est appliqué au moyen de modulation en largeur d'impulsion (50).

# FIG.1

one vertically divided segment comprising 16 horizontal lines

vertically divided segments

FIG.2

one picture element
in horizontal
direction

FIG, 3

0 094 670

FIG.4

FIG.5

## F I G.6

## F I G.7

FIG.8

FIG.9

FIG.10